Europäisches Patentamt

**European Patent Office**

Office européen des brevets

(11) Veröffentlichungsnummer: **0 137 325**
A2

(12) ## EUROPÄISCHE PATENTANMELDUNG

(21) Anmeldenummer: **84110800.4**

(22) Anmeldetag: **11.09.84**

(51) Int. Cl.⁴: **B 60 H 1/00**
B 60 Q 3/04, B 60 K 37/06

(30) Priorität: 14.03.84 DE 3409260
10.10.83 DE 3336828

(43) Veröffentlichungstag der Anmeldung:
17.04.85 Patentblatt 85/16

(84) Benannte Vertragsstaaten:
AT BE CH FR GB IT LI NL SE

(71) Anmelder: PREH, Elektrofeinmechanische Werke Jakob
Preh Nachf. GmbH & Co.
Postfach 1740 Schweinfurter Strasse 5
D-8740 Bad Neustadt/Saale(DE)

(72) Erfinder: Bauer, Karl-Heinz
Lerchenstrasse 9
D-8740 Bad Neustadt/Saale(DE)

(72) Erfinder: Wolf, Reinhold
Hangweg 17
D-8740 Bad Neusstadt/Saale(DE)

(54) Bedieneinheit.

(57) Die Erfindung beschreibt eine Bedieneinheit, insbesondere zum Einstellen von Heizungs-, Klima- und/oder Lüftungsanlagen in Kraftfahrzeugen. In einem länglichen Grundkörper sind zwischen zwei Endstellungen Schiebeglieder geführt. Mit Hilfe dieser Schiebeglieder werden durch Übertragungsmittel Einstellelemente, wie z.B. Klappen oder Motoren, eingestellt. Als Übertragungsmittel ist ein Untersetzungsgetriebe vorgesehen, das aus einer an dem Schiebeglied angeformten ersten Zahnstange und an den Grundkörper angeformten zweiten Zahnstange besteht, wobei zwischen beiden Zahnstangen ein Zahnrad drehbar ist. Dieses Zahnrad ist über ein Verstellmittel, z.B. eine Stange, mit einem Einstellement verbunden.

./...

EP 0 137 325 A2

**Fig. 1**

Preh
Elektrofeinmechanische Werke
Jakob Preh, Nachf. GmbH & Co.
Schweinfurter Straße 5
8740 Bad Neustadt/Saale

0137325

, den 12.03.1984

Bsch/Hi
1/84 Pt.+Hgm

### Bedieneinheit

Die Erfindung geht von einer Bedieneinheit zum Einstellen von Heizungs-, Klima- und/oder Lüftungsanlagen in Kraftfahrzeugen nach dem Oberbegriff des Anspruches 1 aus.

Im Armaturenbrett von Kraftfahrzeugen untergebrachte Bedieneinheiten der gattungsgemäßen Art werden unter anderem z.B. zum unterschiedlich weiten Öffnen von Verteiler-Klappen von Auslässen für kühle oder warme Luft in vielfach als Klimaanlage bezeichneten Einrichtungen der Kraftfahrzeuge verwendet. Die Betätigung erfolgt hierbei meistens über Bowdenzüge.

Ein Bowdenzug ist auch bei der Bedieneinheit vorgesehen, die in der DE-OS 31 25 093 beschrieben ist. Diese Bedieneinheit besteht aus einem länglichen Grundkörper, in dessem im Grundkörper ausgesparten Kanal ein Schiebeglied zwischen zwei Endstellungen verschiebbar ist. Das Schiebeglied wird durch an ihm befestigte Rollen, die an den Kanalwandungen anliegen, im Kanal geführt. An dem Schiebeglied sind in verschiedene Richtungen ragend eine aus dem Grundkörper herausragende Betätigungshandhabe und ein Verstellarm ausgebildet. Mit Hilfe des Verstellarmes wird der Bowdenzug betätigt, wobei dieser Verstellarm gleichzeitig ein eine Kontaktbrücke tragendes Schaltglied ist, dessen Kontaktbrücke mit ortsfesten Kontakten des Grundkörpers im Sinne eines Schiebeschalters zusammenwirkt.

Eine weitere Bedieneinheit für ein Heizungs- und Lüftungsgebläse eines Kraftfahrzeuges ist aus dem DE-GM 83 12 000 bekannt. Aus dem Armaturenbrett ragt ein Teil eines Handrades, das drehbar in einem Grundkörper gelagert ist. Mit an dem Handrad angeformt ist ein Ritzel. Die Zähne des Ritzels stehen mit den Zähnen eines Zahnrades in Eingriff, das seinerseits wieder mit einer Zahnstange in Eingriff steht. Die Zahnstange ist in einer Führung des Grundkörpers längsverschiebbar gehalten. Durch einen an der Zahnstange vorgesehenen Nocken werden beim Verschieben der Zahnstange in

- 2 -

verschiedene Raststellungen nacheinander mehrere nebeneinander liegende Kontakte betätigt. Es erfolgt so eine stufenweise Ein- bzw. Ausschaltung des Gebläsemotors. Mit der Zahnstange verbunden ist eine Anzeigeeinrichtung, die durch einen transparenten Bereich des Armaturenbrettes von außen sichtbar ist.

Da die Schiebeglieder von Bedieneinheiten für die Heizung und Lüftung in Kraftfahrzeugen durch Schlitze ragen, ist leicht eine Verschmutzung des inneren Aufbaus gegeben. Auch tritt durch den Schlitz bei beleuchteten Bedieneinheiten oftmals Fremdlicht aus. Um dies zu verhindern, wird in der DE-OS 32 11 319 vorgeschlagen, den Schlitz durch ein Band abzudecken, das an dem Schiebeglied befestigt ist. Bei dem Band können die Enden offen sein oder es wird ein endloses Band eingesetzt. Das Band selbst ist in einer Ausnehmung zu beiden Seiten des Schlitzes zwischen einem Grundkörper und einer Abdeckblende geführt.

Eine andere Bedieneinheit mit beleuchteten Betätigungsknöpfen ist in der DE-OS 32 06 288 beschrieben. Es sind ein oder mehrere Schiebeglieder vorhanden, die in Schlitzen des Grundkörpers geführt sind. Über einen Zwischenhebel wird durch das Schiebeglied ein Stellhebel betätigt, an dem ein Bowdenzug befestigt ist. Die außen auf den Schiebegliedern angebrachten Betätigungsknöpfe sind mittels beweglicher Lichtleiter beleuchtet. Die Lichtleiter gehen von einer Beleuchtungsquelle aus und sie sind mitten durch das Schiebeglied zum Betätigungsknopf geführt.

Eine beleuchtete Anzeige der jeweiligen Betriebsstellung der Schiebeglieder ist bei der Bedieneinheit gemäß der DE-AS 15 80 098 vorgesehen. Die Schiebeglieder sind in Schlitzen eines Grundkörpers geführt, wobei die aus anderen Schlitzen herausragenden Zapfen die Verstellbewegung der Schiebeglieder über ein Hebelgestänge auf Stellglieder, die ihrerseits die Bowdenzüge verstellen, übertragen. Auf der Vorderseite des Grundkörpers sind Lichtleisten angeordnet, die sich über den ganzen Verstell- weg jedes einzelnen Schiebegliedes erstrecken. Von außen sind sie als Lichtband wahrzunehmen. Die Beleuchtung jeder Lichtleiste erfolgt über ein aus lichtdurchlässigem Kunststoff hergestellten Rahmenteil, das die Lichtstrahlen sammelt und an die Lichtleiter weiterleitet. Zur besseren Kenntlichmachung der Anfangs- und Endstellung des Schiebegliedes ist die Lichtleiste an der vorderen Stirnfläche keilförmig ausgebildet. Es kann auch eine farbige Beleuchtung vorgesehen sein. Es ist aus dieser Druckschrift jedoch nicht zu entnehmen, wie dies geschehen soll.

Eine andere Bedieneinheit für Kraftfahrzeuge, bei der die Betätigungsknöpfe der Schiebeglieder beleuchtet sind, ist aus dem DE-GM 76 34 978 bekannt. Die Schiebeglieder sind in Schlitzen des Grundkörpers geführt. Das für die Beleuchtung der Betätigungsknöpfe erforderliche Licht gelangt über Lichtträgerarme bzw. Lichtleiter von einer zentralen Lichtquelle aus nach Lichtumlenkungen zu den Betätigungsknöpfen. An den Übergangsflächen des Lichtes sind die Lichtleiter geriffelt, so daß eine Streufläche entsteht. Die Lichtleiter werden durch Spritzgießen aus Polymethacrylat hergestellt. Die zentrale Lichtquelle ist in die Öffnung eines Blockes eingesetzt, von dem aus die Lichtleiter ausgehen. Als Lichtquelle dient eine Lumineszenzdiode, die sowohl weißes als auch farbiges Licht aussenden kann.

Ein Lichtleitstab zum farbigen Ausleuchten von Instrumenten in Kraftfahrzeugen ist in dem DE-GM 80 04 562 beschrieben. Auf die Reflexionsfläche des Lichtleitstabes ist eine Farbschicht von 30 µm Dicke aufgetragen. Über dieser Farbschicht befindet sich eine zweite weiße Schicht. Für jede Farbe wird ein eigener Lichtleitstab benötigt. Mit dieser vorgeschlagenen Lösung ist es nicht möglich, mit dem gleichen Lichtleitstab nacheinander zwei verschiedene Farbflächen zu erzeugen.

Aufgabe der vorliegenden Erfindung ist es, eine konstruktiv einfach aufgebaute Bedieneinheit mit verringertem Gewicht nach der eingangs genannten Art derart weiterzubilden, daß eine einwandfreie, reibungsarme und untersetzte Geradführung der Schiebeglieder bei verringerter Bautiefe gegeben ist, wobei gleichzeitig eine einfache, blendfreie, bei Dunkelheit gut sichtbare, in mehreren Farben beleuchtete Anzeige der Betriebsstellung der Bedienungsorgane durch eine einzige Lichtquelle vorhanden ist und wobei das Austreten von Fremdlicht sowie auch von Motorgeräuschen aus dem Schlitz bei gleichzeitiger Verringerung der Verschmutzungsgefahr des inneren Aufbaus verhindert bzw. gemindert ist.

Diese Aufgabe wird erfindungsgemäß durch die im Kennzeichnungsteil des Anspruches 1 angegebenen Merkmale gelöst.

Vorteilhafte Ausgestaltungen ergeben sich aus den Unteransprüchen.

Die Erfindung wird nachfolgend für ein Ausführungsbeispiel anhand der Zeichnungen näher beschrieben.

Von den Figuren zeigt

Figur 1  eine perspektivische Ansicht einer Bedieneinheit,

Figur 2  in Perspektivansicht im vergrößerten Maßstab teilweise aufgebrochen einen Teilausschnitt der Bedieneinheit,

Figur 3  eine perspektivische Ansicht des Schiebegliedes mit Bremsfeder,

Figur 4  eine perspektivische Rückansicht des Leuchtzentrums in Explosionsdarstellung,

Figur 5  eine perspektivische Ansicht eines aus mehreren Einzellichtleitern bestehenden, auf dem Rücken liegenden Lichtleitkörpers,

Figur 6  in gleicher Darstellung ein anderer Lichtleitkörper,

Figur 7  eine perspektivische Ansicht eines einstückigen Lichtleitkörpers,

Figur 8  in gleicher Darstellung ein weiterer einstückiger Lichtleitkörper,

Figur 9  in gleicher Darstellung ein anderer einstückiger Lichtleitkörper.

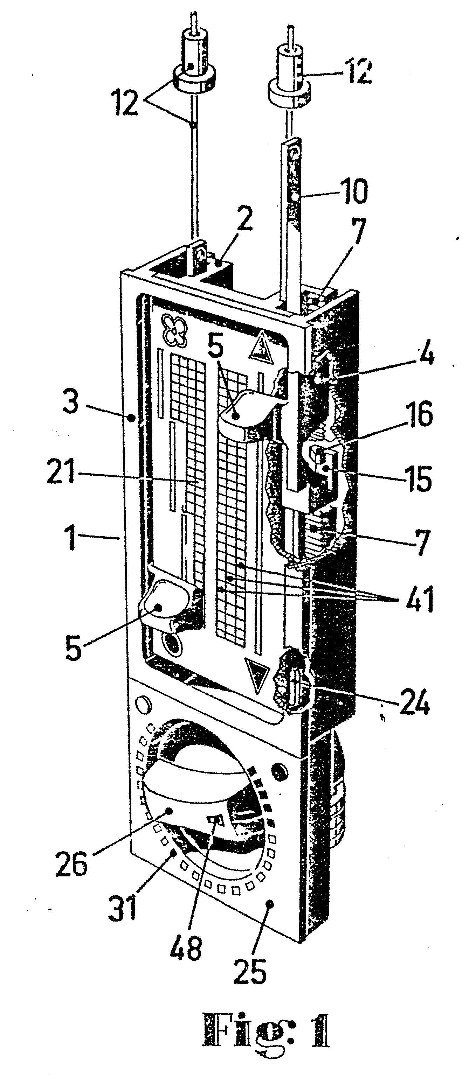

In Figur 1 ist in perspektivischer Darstellung eine Bedieneinheit gezeigt, wie sie z.B. zum Einstellen von Heizungs-, Klima- und/oder Lüftungsanlagen in Kraftfahrzeugen verwendet werden kann. Das hier dargestellte Ausführungsbeispiel besitzt zwei Schiebeglieder und einen Drehknopf. Mit Hilfe dieser Schiebeglieder und des Drehknopfes werden meist mittelbar Einstellelemente betätigt. Bei den Einstellelementen kann es sich um mechanische, wie z.B. Klappen, oder elektrische Bauelemente, wie z.B. Motoren, handeln. Während die mittelbare Betätigung der mechanichen Einstellelemente über Zahnstangen, Seiltriebe, Bowdenzüge usw. erfolgt, wird die mittelbare Betätigung der elektrischen Einstellelemente z.B. über Potentiometer oder Schalter vorgenommen, die durch einen Drehknopf oder einen Schieber betätigt werden. Die Höhe der abgegriffenen Spannung ist ein Maß für den Grad der Einstellung.

In Figur 1 ist mit 2 ein länglicher, im Querschnitt U-förmiger Grundkörper aus Kunststoff bezeichnet, dessen verstärkte Seitenwandungen je eine längliche Aussparung 9 aufweisen. In jeder Aussparung 9 ist das Unter-

setzungsgetriebe eines Schiebegliedes 4 untergebracht, das entlang des Grundkörpers zwischen zwei Endstellungen bewegbar ist. Begrenzt ist der Schiebeweg des Schiebegliedes 4 durch einen an den Grundkörper angeformten Vorsprung 24 als Anschlag. Zweckmäßigerweise sind an beiden Enden des Schiebeweges Vorsprünge vorgesehen.

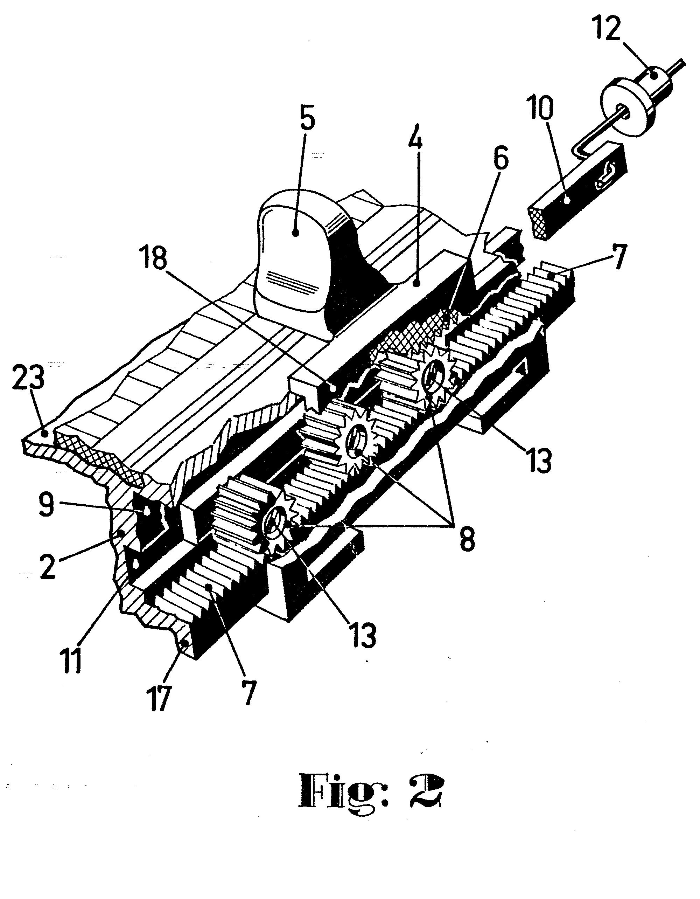

Wie aus Figur 3 zu entnehmen ist, besteht das Schiebeglied 4 aus einem U-förmigen Schlitten mit einer Schlittenbasis 14. Auf der einen Seite der Schlittenbasis sind zu ihr in einem rechten Winkel zwei Haltglieder 15 angeformt, die an der Stirnseite der Schlittenbasis über eine schmale Brücke 43 mit ihr einstückig verbunden sind. Durch diese Art Verbindung sind die Halteglieder federnd ausgebildet. Dies ist deshalb von Bedeutung, da am freien Ende jedes Haltegliedes eine Nase 16 vorhanden ist. Diese Nasen dienen nach dem Einschnappen zur Halterung und Führung des Schiebegliedes am Grundkörper. Die Führung erfolgt hierbei so, daß die Nasen 16 einen Steg 17 hintergreifen, der auf der Unterseite bzw. Rückseite des Grundkörpers randseitig verläuft.

Auf der anderen Seite der Schlittenbasis wird, wie Figur 3 zeigt, der im rechten Winkel stehende Schenkel von einer ersten Zahnstange gebildet, die eine Innenverzahnung aufweist. Auf der Außenseite der ersten Zahnstange 6 ist eine Bremsfeder 19 in eine Einsenkung 44 eingesetzt. Diese Bremsfeder stützt sich unter Vorspannung zum einen an einer Wand der Aussparung 9 im Grundkörper 2 und zum anderen an dem Schiebeglied 4 selbst ab. Mit der Vorspannung kann der gewünschte Schiebegang des Schiebegliedes in bestimmten Grenzen vorgewählt werden.

In Verlängerung der Schlittenbasis 14 ist mit ihr fluchtend ein Winkelstück 18 angeformt, das am abgewinkelten, freien Ende eine Betätigungshandhabe 5 trägt. Die Betätigungshandhabe 5 ist gegenüber der Schlittenbasis 14 und damit gegenüber dem in der gleichen Ebene wie die Schlittenbasis liegenden und dem zwischen Grundkörper 2 und Blendrahmen 3 gebildeten Schlitz hindurchragenden Teil des Winkelstücks 18 zeitlich versetzt, so daß eine Art Labyrinthdichtung entsteht. Damit wird ein gewisser Schutz des Inneren vor Verschmutzung erreicht. Außerdem ist ein weiterer sowohl mechanischer als auch elektrischer Schutz dadurch gegeben, daß man nicht mit einem schmalen Gegenstand durch den Schlitz in das Innere gelangen kann.

Ferner werden die Motorgeräusche gedämpft oder, falls man die Rückseite der Bedieneinheit mit einem Deckel verschließt, stark herabgesetzt.

In der seitlichen Aussparung 9 des Grundkörpers befindet sich ein Linearantrieb mit einem Untersetzungsgetriebe. Dieses besteht unter anderem aus der ersten Zahnstange 6 des Schiebegliedes 4 und einer zweiten Zahnstange 7, die, wie Figur 2 zeigt, an der unteren Wand der Aussparung 9 am Grundkörper ausgebildet ist. Zwischen beiden Zahnstangen sind bei dem in den Figuren dargestellten Ausführungsbeispiel drei Zahnräder 8 drehbar gelagert. Selbstverständlich sind auch Ausführungsbeispiele denkbar, bei denen mehr Zahnräder vorhanden sind. Die Zahnräder 8 sind am Zapfen 13 befestigt, jedoch so, daß sie sich drehen können. Die Zapfen ihrerseits sind an einer Stange 10 angespritzt, die in einer Nut 11 am Boden der Aussparung 9 geführt ist. Wie in Figur 2 veranschaulicht, stehen die Zapfen 13 senkrecht zur Schieberichtung der Stange 10.

Wird nun das Schiebeglied bewegt, so drehen sich die Zahnräder 8, deren Zähne sowohl mit den Zähnen der ersten Zahnstange 6 als auch mit den Zähnen der zweiten Zahnstange in Eingriff stehen. Mit den Zahnrädern bewegt sich auch die Stange 10. Der Schiebeweg der Stange ist durch dieses Untersetzungsgetriebe halb so groß wie der Schiebeweg des Schiebegliedes. Aus diesem Grunde auch ist die erste Zahnstange 6 etwas länger als die Hälfte des Schiebeweges des Schiebegliedes 4. Es ist zweckmäßig, wenigstens drei Zahnräder zu verwenden, um einen sicheren Schiebegang zu erreichen. Am Anfang und am Ende des Schiebeweges des Schiebegliedes in der Nähe der Anschläge stehen nämlich nur jeweils zwei Zahnräder mit beiden Zahnstangen im Eingriff. In der Mitte des Schiebeweges des Schiebegliedes läuft die erste Zahnstange 6 über alle drei Zahnräder.

Wie in den Figuren 1 und 2 veranschaulicht, ist mit jeder Stange 10 ein Bowdenzug 12 verbunden. Mit Hilfe dieses Bowdenzuges werden in den Figuren nicht dargestellte mechanische Einstellelemente verstellt. Neben dieser mechanischen Übertragung der Kraft kann auch eine elektrische Verbindung vorgesehen sein. Ein derartiges Ausführungsbeispiel ist in den Figuren jedoch nicht dargestellt. Hierzu könnte die Nut 11 mit einem Schlitz versehen sein. Durch diesen Schlitz ragt ein an die Stange 10 angeformter oder auf irgend eine Weise befestigter Mitnehmer, mit dessen Hilfe ein Federträger eines Potentiometers verstellt werden kann. Die von der Schleiffeder des Federträgers abgegriffene Spannung wird über eine elektrische Verbindung auf ein zweckmäßigerweise elektrisches Einstellelement, wie z.B. einen Motor, übertragen.

Das in Figur 1 dargestellte Ausführungsbeispiel besitzt zwei Schiebe- und eine Dreh-Einstellmöglichkeit, wobei der Grundkörper 2 durch einen Blendrahmen 3 seitlich und am Rand, wo sich der Schlitz für das Schiebeglied befindet, abgedeckt ist. Will man mehr als zwei Schiebe-Einstellmöglichkeiten, so können im Bedarfsfall mehrere Grundkörper aneinandergereiht werden und durch einen gemeinsamen Blendrahmen abgedeckt werden, jedoch immer so, daß der vorhandene Schlitz von einem Blendrahmensteg abgedeckt und geschützt ist.

Wie aus Figur 1 zu entnehmen ist, ist eine Dreh-Einstellmöglichkeit mit Hilfe eines Drehknopfes 26 vorgesehen. Hierzu ist der Grundkörper 2 an seiner Schmalseite durch einen Ansatz 25 ergänzt, der entweder am Blendrahmen 3 oder am Grundkörper 2 befestigt oder mit ihm einstückig verbunden ist. Dieser Ansatz 25 ist etwa quadratisch ausgebildet, wobei die Breite des Ansatzes 25 der Breite des Grundkörpers 2 mit dem Blendrahmen 3 entspricht.

Ähnlich wie beim Schiebeglied 4, kann auch mit dem Drehknopf 26 z.B. über eine Zahnstange ein mechanisches Einstellelement oder über ein Potentiometer ein elektrisches Einstellelement betätigt werden. Das in der Figur 4 dargestellte Ausführungsbeispiel veranschaulicht die erste Lösungsmöglichkeit mit dem mechanischen Einstellelement. Selbstverständlich ist auch eine Lösung denkbar, bei der die Zahnstange einen Federträger eines Potentiometers bewegt.

Damit die Stellung sowohl des Drehknopfes 26 als auch die der Schiebeglieder insbesondere im Dunkeln besser zu erkennen ist, besitzt die Bedieneinheit, wie aus Figur 4 zu entnehmen ist, eine beleuchtete Anzeigeeinrichtung. Diese besteht aus einem Leuchtzentrum 20, von dem aus in zwei Ebenen Lichtleiter weggeführt sind. Die Lichtleiter 29 der ersten, der untersten Ebene sind sternförmig zum Leuchtzentrum angeordnet. Die Enden 31 der Lichtleiter 29 bilden daher ein Kreissegment und sie sind, wie aus Figur 1 zu entnehmen ist, auf der Frontseite des Ansatzes 25 sichtbar. Da sie nebeneinanderliegen, wird so eine thermometerskalaähnliche Leuchtbandanzeige erzielt. Eine bessere Sichtbarkeit der Drehknopfstellung wird noch dadurch erreicht, daß eine farbige Ausleuchtung der Enden 31 der Lichtleiter 29 erfolgt. Dient der Drehknopf 26 z.B. zur Warm-/Kalt-Einstellung, so wird eine blau/rote Farbanzeige verwendet. Die Farbanzeige muß dabei so beschaffen sein, daß in einer Endstellung des Drehknopfes alle Enden 31 nur rot oder in der anderen Endstellung nur blau aufleuchten.

Auf der Rückseite des Ansatzes 25 befindet sich das Leuchtzentrum 20. Ein rundes erstes Teil 32 aus Kunststoff ist an dem Ansatz auf der Rückseite befestigt. Im ersten Teil 32 sind radial verlaufende Einbuchtungen 45 ausgespart, die die Lichtleiter 29 der ersten Ebene aufnehmen. Ferner ist in der Mitte eine zentrale Ausnehmung 34 vorgesehen, in der ein Drehkörper 35 drehbar gelagert ist. Dieser Drehkörper ist in der Art einer hohlzylindrischen Welle ausgebildet, die durch den Ansatz 25 ragt und auf der Frontseite durch einen Sprengring 46 gegen eine axiale Verschiebung gesichert ist.

In der Mitte des Drehknopfes ist eine Höhlung 47 ausgespart, die sich in das Griffstück fortsetzt und die auf der Frontseite des Griffstücks durch ein Fenster 48 aus einem durchsichtigen Material abgeschlossen ist. Von der Höhlung 47 aus erstreckt sich radial eine Senke 49. In die Höhlung 47 und in die Senke 49 ist ein Einsatz 50 eingeführt, der aus einem lichtleitenden Material hergestellt ist. Wie aus Figur 4 zu entnehmen ist, ist dieser Einsatz 50 mehrfach abgewinkelt und mit Abschrägungen zur Umlenkung der Lichtstrahlen versehen.

Die Mitnahme des Drehkörpers 35 durch den Drehknopf 26 erfolgt derart, daß der Drehkörper 35 stirnseitig zwei sich diametral gegenüberliegende Öffnungen 51 besitzt, wobei auf der einen Seite der Einsatz 50 in eine der Öffnungen eintaucht und wobei auf der gegenüberliegenden Seite ein in die Höhlung 47 ragender, angeformter und in den Figuren nicht sichtbarer Mitnehmer in die andere Öffnung hineinragt. Zur Befestigung des Drehknopfes am Drehkörper kann man den Mitnehmer und die Öffnung so ausbilden, daß ein Schiebesitz mit Snap-in-Effekt entsteht.

In unmittelbarer Nähe des Drehkörpers befindet sich auf der Rückseite des Ansatzes 25 eine angeformte Führungsleiste 40 mit einer durchgehenden Führungskammer zur Aufnahme einer darin verschiebbaren dritten Zahnstange 39. Auf einer Seite ist die dritte Zahnstange mit Zähnen versehen, die durch einen Ausschnitt in der Führungskammer hindurch mit den Zähnen des Ritzels 38 in Eingriff stehen. Wird der Drehkörper durch den Drehknopf gedreht, so verschiebt sich die dritte Zahnstange und über einen Bowdenzug können mechanische Einstellelemente oder auch Schiebepotentiometer oder Schiebeschalter betätigt werden, die ihrerseits wieder auf elektrischem Wege meist elektrische Einstellelemente in Bewegung setzen.

Zumindest der Abschnitt des Drehkörpers 35, der in den ersten Teil 32 ragt, besteht aus einem lichtdurchlässigen Material. Zwischen diesem Abschnitt und der Wand der zentrischen Ausnehmung 34 sind Farbbänder 37 geführt und am Drehkörper befestigt. Ein Farbband ist rot und eines blau eingefärbt. Beide Farbbänder sind länger als die am Umfang verteilten Lichtleitereintrittsstellen 36. Zweckmäßigerweise sind sie länger als der lichte Umfang der zentrischen Ausnehmung 34. Um keine Farbverfälschung durch sich überlappende Farbbänder zu erhalten, ist im ersten Teil 32 eine Austrittsöffnung 28 vorgesehen, durch die die überstehenden, bei einer bestimmten Stellung des Drehknopfes nicht benötigten Farbbandanteile herausragen. Damit eine Beschädigung der Farbbänder vermieden wird, sind die Farbbänder in einer Führung 52 angeordnet. Je nach Stellung des Drehknopfes, leuchtet ein Teil der Enden 31 der Lichtleiter 29 rot und der andere Teil blau. Damit ist leicht zu erkennen, wie im Kraftfahrzeug die Heizung und die Lüftung durch Frischluft eingestellt sind. Da in den Endanschlagstellungen alle Enden der Lichtleiter nur in einer Farbe leuchten sollen, muß jedes Farbband länger sein als die am Umfang verteilten Lichtleitereintrittsstellen 36.

Während die Lichtleiter 29 des ersten Teils 32 des Leuchtzentrums 20 farbiges Licht übertragen, leiten die Lichtleiter 30 nur weißes Licht weiter. Diese Lichtleiter 30 sind in einer zweiten Ebene angeordnet und sie sind in einem zweiten Teil 33 des Leuchtzentrums 20 gehalten. Der zweite Teil 33 ist mit dem ersten Teil verbunden, z.B. durch eine Schnappverbindung. In der Mitte des zweiten Teiles ist ein Durchbruch 53 ausgespart, in den eine Lampenfassung 54 mit einer Lichtquelle 27 eingesetzt ist. Diese Lichtquelle ragt sowohl in den ersten Teil als auch in den zweiten Teil. Es ist auch ein Ausführungsbeispiel denkbar, bei dem die Lampenfassung einstückig am zweiten Teil mit angeformt ist.

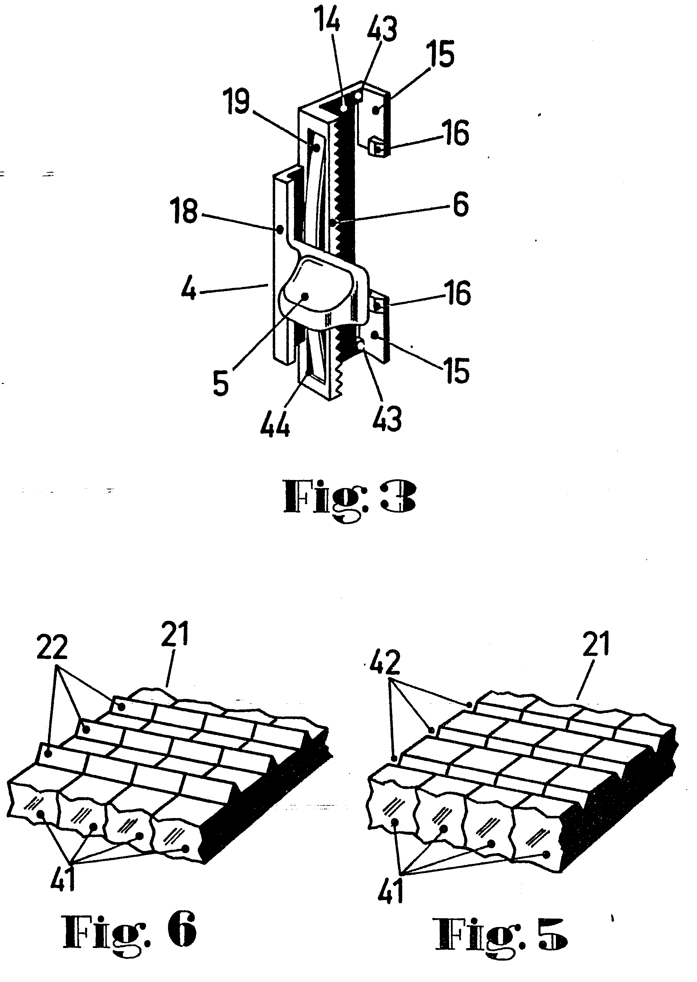

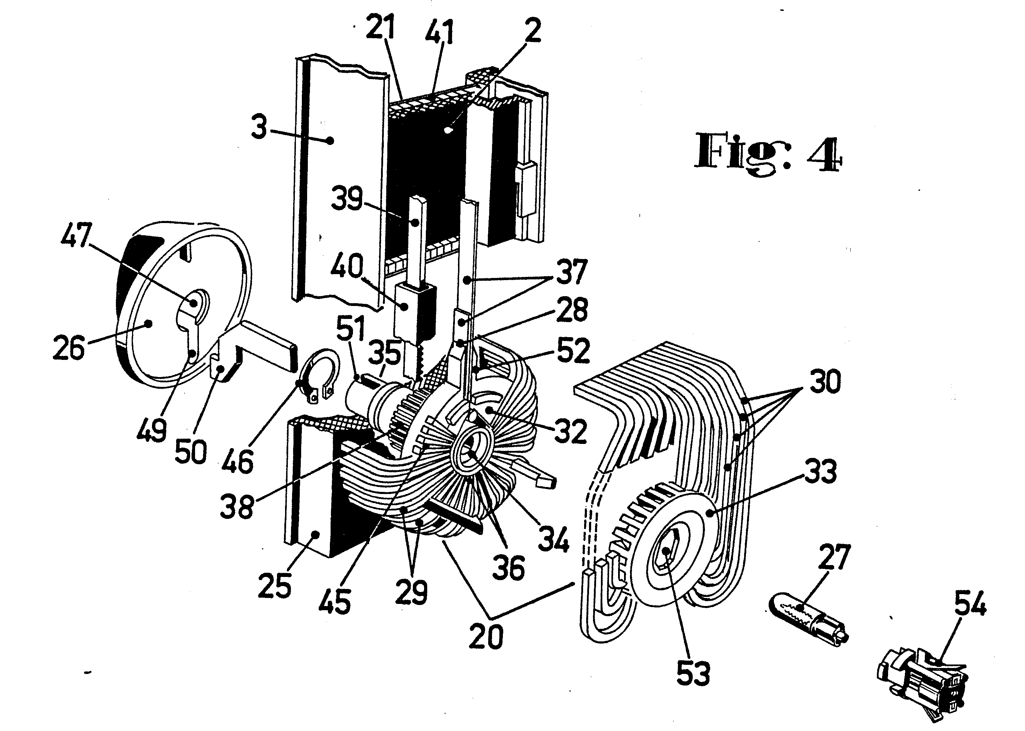

Die vom zweiten Teil 33 in der zweiten Ebene ausgehenden, etwa kreisförmig angeordneten Lichtleiter 30 sind zu einem in einer Ebene liegenden Licht-leitkörper 21 geführt, der sich auf der Frontseite des Grundkörpers 2 befindet. Dieser Lichtleitkörper 21 setzt sich bei dem in den Figuren 5 und 6 dargestellten Ausführungsbeispiel aus lauter Einzellichtleitern 41 zusammen. Mit Hilfe dieser Einzellichtleiter 41 soll eine flächige Ausleuchtung erzielt werden, um so die jeweilige Stellung der Schiebeglieder besser erkennen zu können. Für die flächige Ausleuchtung kann man zwischen zwei Ausführungsmöglichkeiten wählen, die in den Figuren 5 und 6 dargestellt sind. Die Figuren 5 und 6 zeigen die Einzellichtleiter 41 auf dem Rücken liegend, d.h. daß sich im eingebauten Zustand die Erhebungen 22 bzw. die Einschnitte 42 auf der Unterseite, d.h. auf der Oberfläche des Grundkörpers gegenüberliegend, befinden. An den Erhebungen und Einschnitten wird das Licht abgelenkt und zu der glatten Oberfläche geführt. Wie aus Figur 1 zu entnehmen ist, erstrecken sich die Erhebungen bzw. die Ein-schnitte nicht über die gesamte Länge der Einzellichtleiter. Wichtig ist, daß eine möglichst gleichmäßige Ausleuchtung der gesamten Fläche erreicht wird. Da die Lichtleiter 29, 30 und die Einzellichtleiter 41 im Spritzgießverfahren hergestellt werden, ist die Ausführung gemäß Figur 5 werkzeugtechnisch schwieriger anzufertigen. Bevorzugt wird daher die Ausführung gemäß Figur 6. Im Werkzeug wird hierzu analog zur Erhebung 22 des Einzellichtleiters 41 eine Einsenkung in das Spritzwerkzeug eingearbeitet, deren Oberfläche im Gegensatz zu einer Erhöhung sehr glatt geschliffen werden kann. Damit kann für die Erhebung 22 eine ebenfalls glatte Oberfläche auf relativ einfache Weise erzielt werden. Diese glatte Oberfläche ist sehr wichtig für die Lichtumlenkung bzw. Lichtstreuung. Bedingt durch die voran-gehende Führung im Lichtleiter 30, werden die Lichtstrahlen ohnehin nicht parallel zur Oberfläche eingestrahlt, so daß sie an den Erhebungen 22 zur glatten Oberfläche umgelenkt werden können. Auf diese Weise wird nur ein relativ kleiner Anteil der Lichtstrahlen pro Erhebung abgezweigt, so daß eine verhältnismäßig gute, gleichmäßige Ausstrahlung des ganzen Einzellichtleiters erreicht wird.

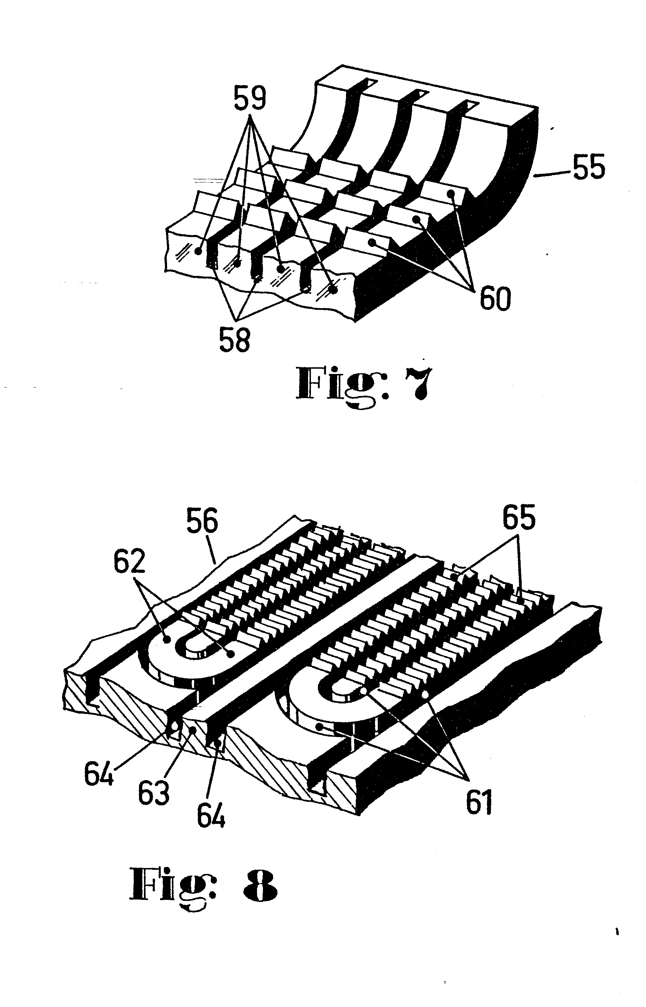

Bei dem in den Figuren dargestellten Ausführungsbeispiel sind mehrere Einzellichtleiter dicht nebeneinander angeordnet. Es ist selbstverständlich auch denkbar, nur eine einzige Lichtleitplatte zu verwenden. Die Figuren 7 bis 9 zeigen drei Beispiele einer einstückigen Lichtleitplatte 55, 56 und 57. Sie sind, ähnlich wie bei den Figuren 5 und 6, auf dem Rücken liegend dargestellt.

Bei dem Ausführungsbeispiel gemäß Figur 7 sind in einer Lichtleitplatte 55 mehrere, parallel laufende Furchen 58 ausgespart. Die Furchen trennen die Lichtleiter 59 voneinander. Für die Lichtumlenkung bzw. Lichtstreuung wurden -wie bereits in der Beschreibung zu Figur 6 erwähnt-, aus werkzeugtechnischen Gründen Erhebungen 60 vorgesehen. Am Ende des Grundkörpers sind die Lichtleiter 59 umgebogen und von da aus zu dem Leuchtzentrum geführt.

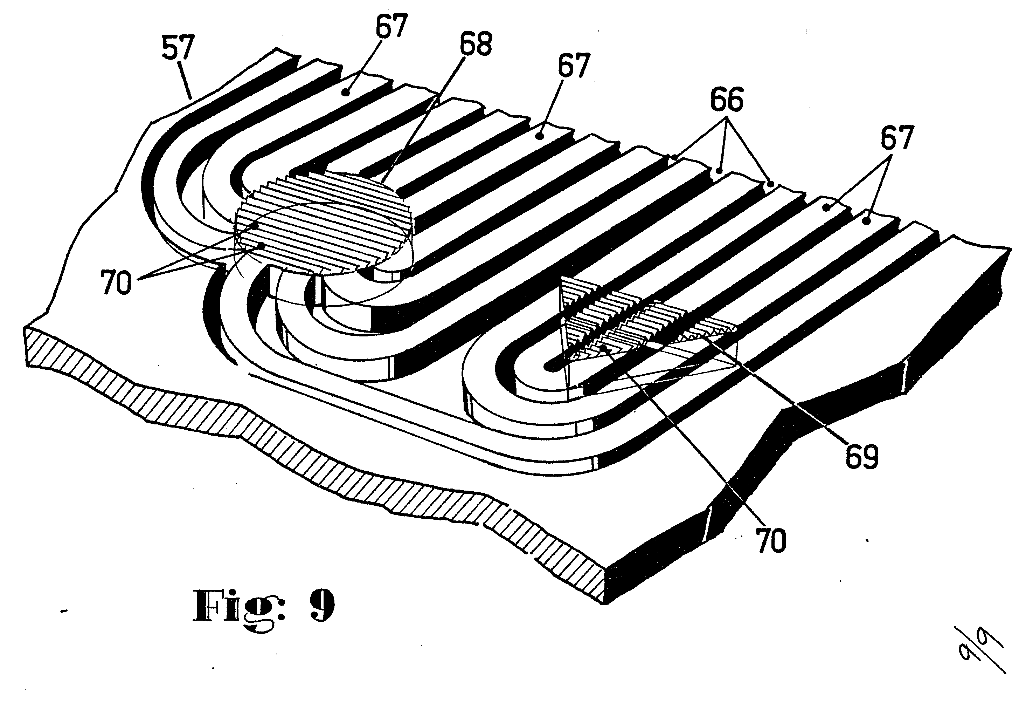

Ein weiteres Ausführungsbeispiel einer einstückigen Lichtleitplatte 56 zeigt die Figur 8. Auch hier sind mehrere Furchen 61 vorgesehen, die, im Gegensatz zu den Furchen der Figur 7, auch gekrümmt sein können. Dadurch werden Lichtleiter 62 gebildet, die ineinander übergehen. Eine optimale Ausnutzung des Lichtes ist so gewährleistet. Etwa in der Mitte der Figur 8 verläuft ein gerader Lichtleiter 63, der von zwei geraden Furchen 64 begrenzt ist. Dieser Lichtleiter 63 dient dazu, z.B. zusätzlich einen nicht dargestellten Schalter zu beleuchten. Es sind auch hier Erhebungen 65 vorgesehen, deren Ausdehnung der zu beleuchtenden Fläche entspricht. In Figur 8 soll eine größere Fläche möglichst gleichmäßig beleuchtet werden. Selbstverständlich können auch kleinere Flächen oder Symbole, wie z.B. Kreise, Dreiecke usw., beleuchtet werden. Hierzu ist nur erforderlich, daß die Flächenanordnung der Erhebungen eine entsprechende Gestaltung erhält.

Eine mögliche Gestaltungsform ist aus der Figur 9 zu entnehmen. Auch diese Lichtleitplatte 57 besitzt mehrere Furchen 66, durch die verschiedene Lichtleiter 67 gebildet werden. Die Lichtleiter 67 sind zu den zu beleuchtenden Flächen 68 und 69 geführt, wobei möglichst alle Lichtleiter ausgenutzt werden. Die Lichtleiter besitzen auch hier an den Stellen bzw. Flächen, die beleuchtet werden sollen, Erhebungen 70.

Wie insbesondere Figur 2 zeigt, ist auf der Frontseite des Grundkörpers 2 eine Vertiefung 23 vorgesehen, die den Lichtleitkörper aufnimmt. Damit ist ein besserer Schutz des Lichtleitkörpers gegeben. Außerdem kann der Lichtleitkörper im Bedarfsfall noch leichter mit einer Folie abgedeckt werden, die mit einer Beschriftung und/oder mit Symbolzeichen versehen ist. Üblicherweise wird als transparentes Material für Lichtleiter Plexiglas (Polymethylmethacrylat)verwendet. Die Grenze der Formbeständigkeit dieses Materials liegt etwa bei 90° bis 100° Celsius. Da in Kraftfahrzeugen recht erhebliche Temperaturen erreicht werden können, ist es zweckmäßig, ein Material einzusetzen, das einen größeren Anwendungsbereich aufweist und das eine bessere Lichtleitfähigkeit besitzt. Ein Material, das diesen Anforderungen entspricht ist Polycarbonat (Handelsname: Makrolon). Die Formbeständigkeit liegt bei 140° bis 150° Celsius. Der Anwendungsbereich, in dem hohe Festigkeit, Steifheit, Härte und Zähigkeit gegeben sind, liegt bei -150° bis +135° Celsius. Der Brechungsindex ist mit 1,56 bis 1,65 für transparente Kunststoffe sehr hoch.

0137325

## Bezugszeichenliste

| | |
|---|---|
| 1 | Bedieneinheit |
| 2 | Grundkörper |
| 3 | Blendrahmen |
| 4 | Schiebeglied |
| 5 | Betätigungshandhabe |
| 6 | erste Zahnstange |
| 7 | zweite Zahnstange |
| 8 | Zahnrad |
| 9 | Aussparung |
| 10 | Stange |
| 11 | Nut |
| 12 | Bowdenzug |
| 13 | Zapfen |
| 14 | Schlittenbasis |
| 15 | Halteglied |
| 16 | Nasen |
| 17 | Steg |
| 18 | Winkelstück |
| 19 | Bremsfeder |
| 20 | Leuchtzentrum |
| 21 | Lichtleitkörper |
| 22 | Erhebung |
| 23 | Vertiefung |
| 24 | Vorsprung |
| 25 | Ansatz |
| 26 | Drehknopf |
| 27 | Lichtquelle |
| 28 | Austrittsöffnung |
| 29 | Lichtleiter (1. Ebene) |
| 30 | Lichtleiter (2. Ebene) |
| 31 | Ende des Lichtleiters 29 |
| 32 | erster Teil |
| 33 | zweiter Teil |
| 34 | Ausnehmung |
| 35 | Drehkörper |
| 36 | Lichtleitereintrittsstellen |
| 37 | Farbband |
| 38 | Ritzel |
| 39 | dritte Zahnstange |
| 40 | Führungsleiste |
| 41 | Einzellichtleiter |
| 42 | Einschnitt |
| 43 | Brücke |
| 44 | Einsenkung |
| 45 | Einbuchtung |
| 46 | Sprengring |
| 47 | Höhlung |
| 48 | Fenster |
| 49 | Senke |
| 50 | Einsatz |
| 51 | Öffnung |
| 52 | Führung |
| 53 | Durchbruch |
| 54 | Lampenfassung |
| 55 | Lichtleitplatte |
| 56 | Lichtleitplatte |
| 57 | Lichtleitplatte |
| 58 | Furche |
| 59 | Lichtleiter |
| 60 | Erhebung |
| 61 | Furche |
| 62 | Lichtleiter |
| 63 | Lichtleiter |
| 64 | Furche |
| 65 | Erhebung |
| 66 | Furche |
| 67 | Lichtleiter |
| 68 | Fläche |
| 69 | Fläche |
| 70 | Erhebung |

P r e h
Elektrofeinmechanische Werke
Jakob Preh, Nachf. GmbH & Co.
Schweinfurter Straße 5
8740 Bad Neustadt/Saale

0137325

, den 12.03.1984

Bsch/Hi
1/84 Pt.+Hgm

### Bedieneinheit

1. Bedieneinheit (1), insbesondere zum Einstellen von Heizungs-, Klima- und/oder Lüftungsanlagen in Kraftfahrzeugen, mit mindestens einem in einem länglichen Grundkörper (2) zwischen zwei Endstellungen verschiebbar geführten Schiebeglied (4), dessen Betätigungshandhabe (5) aus dem Grundkörper (2) herausragt und das mit Hilfe von Übertragungsmitteln (6, 7, 8, 10, 12) auf Einstellelemente einwirkt, dadurch gekennzeichnet, daß die Übertragungsmittel aus einem Untersetzungsgetriebe bestehen mit einer an das Schiebeglied (4) angeformten, ortsveränderbaren ersten Zahnstange (6) und mit einer an den Grundkörper (2) angeformten, ortsfesten zweiten Zahnstange (7), wobei zwischen beiden Zahnstangen (6, 7) mindestens ein mit den beiden Zahnstangen in Wirkverbindung stehendes Zahnrad (8) dreh- und verschiebbar gelagert ist, das mit einem auf das Einstellelement mittel- oder unmittelbar einwirkenden Verstellmittel (10) verbunden ist.

2. Bedieneinheit nach Anspruch 1, dadurch gekennzeichnet, daß sich das Untersetzungsgetriebe in einer seitlichen Aussparung (9) des Grundkörpers (2) befindet.

3. Bedieneinheit nach Anspruch 1, dadurch gekennzeichnet, daß das Verstellmittel eine verschiebbare Stange (10) ist, die in einer Nut (11) im Boden der Aussparung (9) des Grundkörpers (2) geführt ist.

4. Bedieneinheit nach Anspruch 3, dadurch gekennzeichnet, daß an der Stange (10) ein Bowdenzug (12) befestigt ist.

5. Bedieneinheit nach Anspruch 3,

dadurch gekennzeichnet,

daß an die Stange (10) senkrecht zur Verschieberichtung ein Zapfen (13) angeformt ist, auf dem das Zahnrad (8) drehbar befestigt ist.

6. Bedieneinheit nach Anspruch 3,

dadurch gekennzeichnet,

daß die Nut (11) einen Schlitz aufweist, durch den ein an die Stange angeformter Mitnehmer für den einen Schleifkontakt tragenden Federträger eines einstellbaren Widerstandes ragt.

7. Bedieneinheit nach Anspruch 1,

dadurch gekennzeichnet,

daß die erste Zahnstange (6) länger ist als die Hälfte des Schiebeweges.

8. Bedieneinheit nach Anspruch 1,

dadurch gekennzeichnet,

daß das Schiebeglied (4) ein etwa U-förmiger Schlitten ist, dessen an die Schlittenbasis (14) angeformter erster Schenkel von mindestens zwei Haltegliedern (15) gebildet wird, deren vorstehende Nasen (16) einen an den Grundkörper (2) angeformten Steg (17) hintergreifen, und dessen zweiter Schenkel von der ersten Zahnstange (6) gebildet wird.

9. Bedieneinheit nach Anspruch 8,

dadurch gekennzeichnet,

daß auf der Höhe der Schlittenbasis (14) an die erste Zahnstange (6) ein den Grundkörper (2) durchragendes Winkelstück (18) angeformt ist, dessen freies Ende die Betätigungshandhabe (5) trägt.

10. Bedieneinheit nach Anspruch 9,

dadurch gekennzeichnet,

daß die Betätigungshandhabe (5) zur Schlittenbasis (14) seitlich versetzt ist.

0137325

11. Bedieneinheit nach Anspruch 8,

    dadurch gekennzeichnet,

    daß das Schiebeglied (4) auf der Außenseite der ersten Zahnstange (6) eine Bremsfeder (19) trägt, die zwischen der ersten Zahnstange (6) und dem Grundkörper (2) unter Vorspannung eingesetzt ist.

12. Bedieneinheit nach Anspruch 1,

    dadurch gekennzeichnet,

    daß der Grundkörper (2) in einen Blendrahmen (3) einsetzbar ist.

13. Bedieneinheit nach Anspruch 1,

    dadurch gekennzeichnet,

    daß mehrere Grundkörper (2) aneinandergesetzt und durch einen gemeinsamen Blendrahmen abgedeckt sind.

14. Bedieneinheit nach Anspruch 1,

    dadurch gekennzeichnet,

    daß mehrere Zahnräder (8) vorgesehen sind, wovon mindestens zwei immer mit den Zähnen der ersten Zahnstange (6) in Eingriff stehen.

15. Bedieneinheit nach Anspruch 1,

    dadurch gekennzeichnet,

    daß am Grundkörper (2) mindestens an einem Schiebewegende ein Anschlag in Form eines Vorsprunges (24) vorgesehen ist.

16. Bedieneinheit nach Anspruch 1 oder 12,

    dadurch gekennzeichnet,

    daß seitlich zum Grundkörper (2) ein Ansatz (25) mit dem Grundkörper (2) oder mit dem Blendrahmen (3) verbunden ist, der einen Drehknopf (26) trägt.

17. Bedieneinheit nach Anspruch 16,

    dadurch gekennzeichnet,

    daß sich auf der Rückseite des Ansatzes (25) ein Leuchtzentrum (20) mit einer Lichtquelle (27) befindet, von dem sternförmig Lichtleiter (29, 30) ausgehen.

18. Bedieneinheit nach Anspruch 17,
   dadurch gekennzeichnet,
   daß die Lichtleiter (29, 30) in einer unteren, ersten Ebene und in
   einer oberen, zweiten Ebene angeordnet sind.

19. Bedieneinheit nach Anspruch 18,
   dadurch gekennzeichnet,
   daß die Lichtleiter (29) der unteren, ersten Ebene so angeordnet sind,
   daß die Enden (31) der Lichtleiter (29) den Ansatz (25) durchragend,
   ringförmig nebeneinander liegend eine thermometerskalaähnliche Anzeige
   der Stellung des Drehknopfes (26) ergeben.

20. Bedieneinheit nach Anspruch 17,
   dadurch gekennzeichnet,
   daß das Leuchtzentrum (20) aus einem mit dem Ansatz (25) verbundenen
   ersten Teil (32) und einem auf dem ersten Teil befestigbaren zweiten
   Teil (33) besteht, wobei die Lichtleiter (29) der ersten Ebene im
   ersten Teil (32) und die Lichtleiter (30) der zweiten Ebene im zweiten
   Teil (33) gehaltert sind.

21. Bedieneinheit nach Anspruch 20,
   dadurch gekennzeichnet,
   daß in einer zentrischen Ausnehmung (34) des ersten Teils (32) ein
   durch den Drehknopf (26) relativ zum ersten Teil (32) bewegbarer
   Drehkörper (35) gelagert ist.

22. Bedieneinheit nach Anspruch 21,
   dadurch gekennzeichnet,
   daß am Drehkörper (35) mindestens ein die Lichtleitereintrittsstellen
   (36) des ersten Teiles (32) abdeckendes Farbband (37) befestigt und
   zwischen Drehkörper (35) und der Wand der zentrischen Ausnehmung (34)
   des ersten Teiles (32) geführt ist, wobei die Länge des Farbbandes
   (37) mindestens aller der am Umfang vorgesehenen Lichtleitereintrittsstellen (36) entspricht und wobei am ersten Teil (32) für das Farbband (37) mindestens eine Austrittsöffnung (28) vorgesehen ist.

23. Bedieneinheit nach Anspruch 21,
dadurch gekennzeichnet,
daß der Drehkörper (35) ein Ritzel (38) aufweist, dessen Zähne mit
den Zähnen einer dritten Zahnstange (39) zusammenwirken, die in einer
Führungskammer einer auf der Rückseite des Ansatzes angeformten
Führungsleiste (40) zwischen den Lichtleitern (29) geführt ist.

24. Bedieneinheit nach Anspruch 18,
dadurch gekennzeichnet,
daß die Lichtleiter (30) der zweiten Ebene zu einem Lichtleitkörper
(21) auf der Frontseite des Grundkörpers (2) geführt sind.

25. Bedieneinheit nach Anspruch 24,
dadurch gekennzeichnet,
daß der Lichtleitkörper (21) aus mehreren Einzellichtleitern (41)
oder, insbesondere bei mehreren nebeneinander angeordneten Grundkörpern, aus einer einzigen Platte besteht.

26. Bedieneinheit nach Anspruch 24,
dadurch gekennzeichnet,
daß sich der Lichtleitkörper (21) in einer Vertiefung (23) der
Frontseite des Grundkörpers (2) befindet.

27. Bedieneinheit nach Anspruch 24,
dadurch gekennzeichnet,
daß die Rückseite des Lichtleitkörpers bzw. der Einzellichtleiter
(41) örtlich begrenzt Erhebungen (22) oder Einschnitte (42) aufweist.

28. Bedieneinheit nach Anspruch 17,
dadurch gekennzeichnet,
daß Lichtleiter (29, 30) und Lichtleitkörper (21 bzw. 41) im Spritzgießverfahren aus Polycarbonat hergestellt sind.

Fig: 1

Fig: 2

**Fig. 3**

**Fig. 6**

**Fig. 5**

# Fig: 4

0137325
5/6

**Fig: 7**

**Fig: 8**

Fig. 9